# EUROPÄISCHE PATENTSCHRIFT

(11) **EP 1 883 756 B1**
(45) Veröffentlichungstag und Bekanntmachung des Hinweises auf die Patenterteilung: **30.09.2009**
(21) Anmeldenummer: 06791514.0
(22) Anmeldetag: 17.05.2006
(51) Int. Cl.: F16D 59/02

(54) **SEGMENTBREMSE**
SEGMENT BRAKE
FREIN A SEGMENT

(30) Priorität: 18.05.2005 DE 102005022898
(43) Veröffentlichungstag der Anmeldung: 06.02.2008
(73) Patentinhaber: Chr. Mayr GmbH & Co. KG, 87665 Mauerstetten (DE)
(72) Erfinder: EBERLE, Johann, 87660 Irsee (DE); WEISS, Harald, 87677 Stöttwang (DE); DROPMANN, Christoph, 87600 Kaufbeuren (DE); KLINGLER, Günter, 86869 Oberostendorf (DE)
(74) Vertreter: Ruschke, Hans Edvard
(86) Internationale Anmeldenummer: PCT/EP2006/004694
(87) Internationale Veröffentlichungsnummer: WO 2006/136246

(56) Entgegenhaltungen:
- EP-A- 0 961 047
- EP-A- 1 715 564
- DE-A1- 4 221 983
- DE-A1- 4 225 158
- DE-A1- 10 006 255
- DE-C1- 19 814 042

## Beschreibung

### Stand der Technik:

Aus der Offenlegungsschrift DE 19807654 A1 der Fa. Mayr ist bekannt, dass eine elektromagnetische Federdruckbremse mit einem ringförmigen Spulenträger und einer Spule und einem Reibbelag, welcher über eine Zwischenscheibe mit der Ankerscheibe der elektromagnetischen Federdruckbremse verbunden ist, radial von außen, also am Außenumfang, oder von innen, oder an einer der Stirnflächen eines rotierenden Elementes angreift, d.h. dass das rotierende Element abgebremst werden kann. Es wird auch (Anspruch 4) beschrieben, dass z.B. zwei solche Bremsen an der rotierenden Scheibe angreifen können. Des weiteren wird in Anspruch 9 darauf hingewiesen, dass das rotierende Element 12 eine Seiltrommel einer Aufzugsanlage oder der Rotor eines Aufzugsmotors sein kann.

Aus der DE 3400675 C2 ist bekannt, dass der Spulenträger zur Aufnahme der Spule nicht nur rund, sondern auch rechteckig ausgeführt werden kann.

Aus der WO 0159317 A1 der Fa. Mayr geht aus Figur 5 hervor, dass z.B. bei einer elektromagnetischen Federdruckbremse die elektromagnetische Spule 12a und 12b zweiteilig und nierenförmig ausgebildet sein kann. Dies wird deshalb gemacht, dass mit einer zusätzlichen geteilten Ankerscheibe eine Zweikreisigkeit (segmentartig) vorhanden ist und möglichst viel Spulenraum ausgenutzt wird. Es bestünde auch die Möglichkeit, eine sogenannte ovale Spule in einen Spulenkörper einzubringen.

Aus der EP-A-1 715 564, Veröffentlicht am 25.10.2006, ist eine Segmentbremse mit zwei elektromagnetisch lüftenden Federdruckbremsen bekannt.

### Aufgabe:

Als Aufgabe wurde gesehen, dass aufbauend auf die Offenlegungsschrift DE 19807654 A1 eine weitere Optimierung einer Bremse geschaffen wird, welche auf die Stirnfläche eines rotierenden Elementes angreift.

### Lösung:

Diese Optimierung wird durch die Segmentbremse gemäß Anspruch 1 oder Anspruch 2. Bei der Ausgestaltung des Spulenträgers wurde zwei jeweils rechteckige Formen gewählt, mit einer ovalen Spule darin - oder alternativ mit zwei runden Spulen über einander, um möglichst raumoptimiert zu arbeiten..

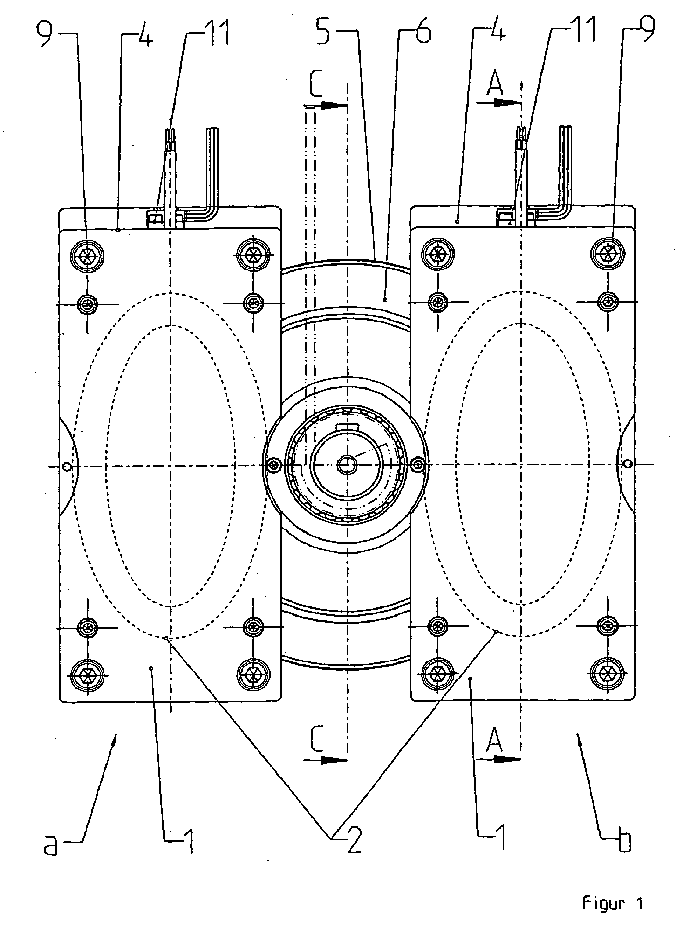

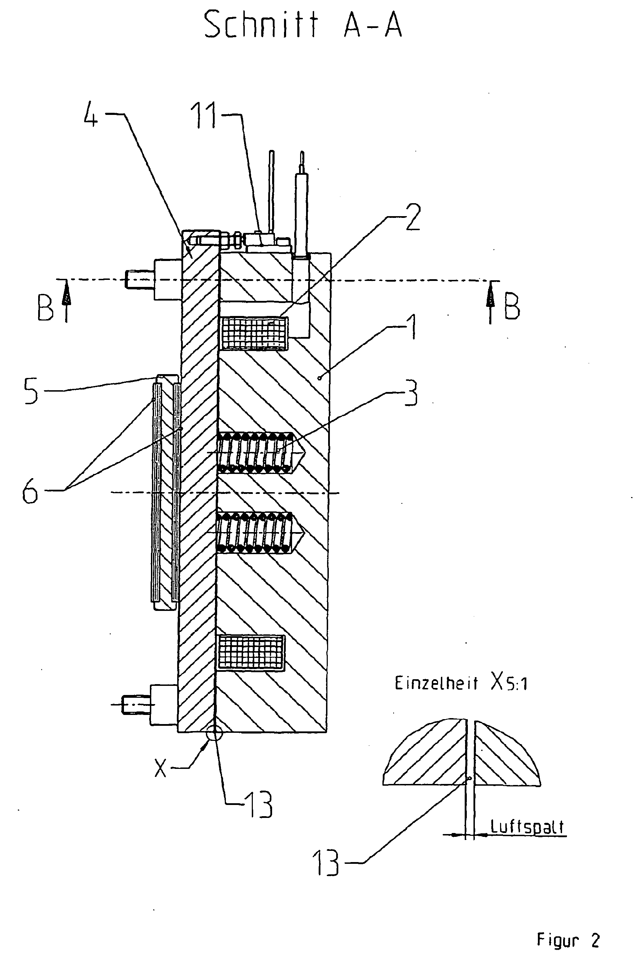

Als weitere Möglichkeit wurden mehrere rund ausgeführte Federdruckbremsen am Umfang verteilt angebracht, um gegen den Rotor mit seinen beiderseitigen Reibbelägen zu drücken und ein sehr vielfältig variables Drehmoment durch Variation der Anzahl der "aktiven" Bremsen zu erhalten.
Figur 1
   Linke Bremse a und rechte Bremse b, welche beide symmetrisch ausgeführt sind und in der weiteren Beschreibung als eine Baugruppe beschrieben werden.
Figur 2
   zeigt einen Schnitt A-A durch die rechte Bremse b.
Figur 3
   zeigt die Befestigung der Bremse b, wobei der Schnitt B-B in Figur 2 durch die Befestigung gelegt wurde.
Figur 4
   zeigt einen Schnitt C-C durch den Rotor und Zahnnabe, sowie Abtriebswelle der Bremse b. Die Schnittangabe ist in Figur 1 dargestellt.
Figur 5

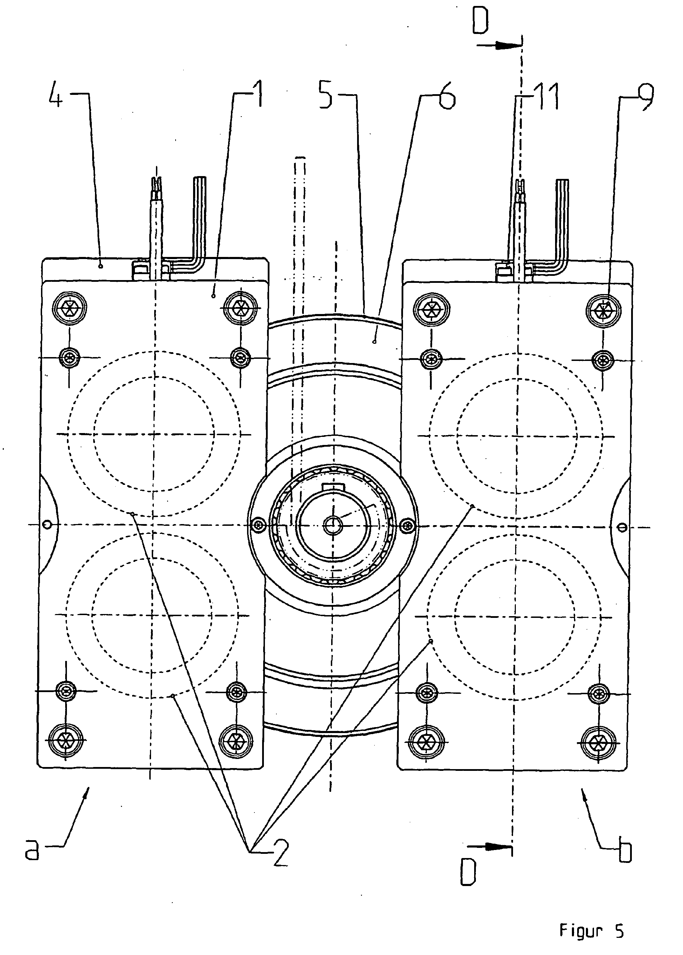

   In Figur 5 ist bei beiden Bremsen a und Bremse b eine weitere Ausgestaltung der Spule 2 als kreisringförmige Spule dargestellt.
Figur 6

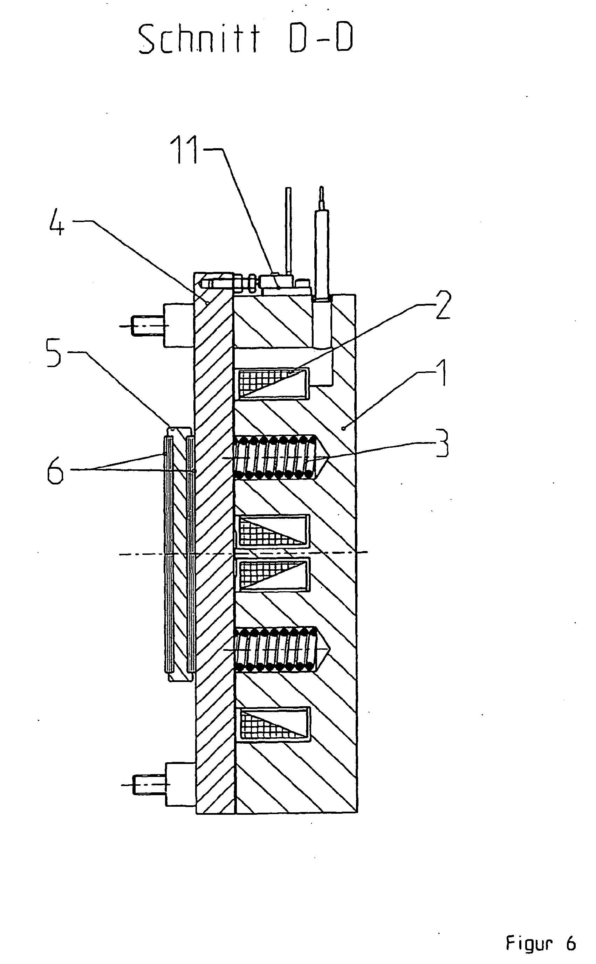

   In Figur 6 wird ein Schnitt D-D, welcher durch Figur 5 gelegt wurde dargestellt.
Figur 7

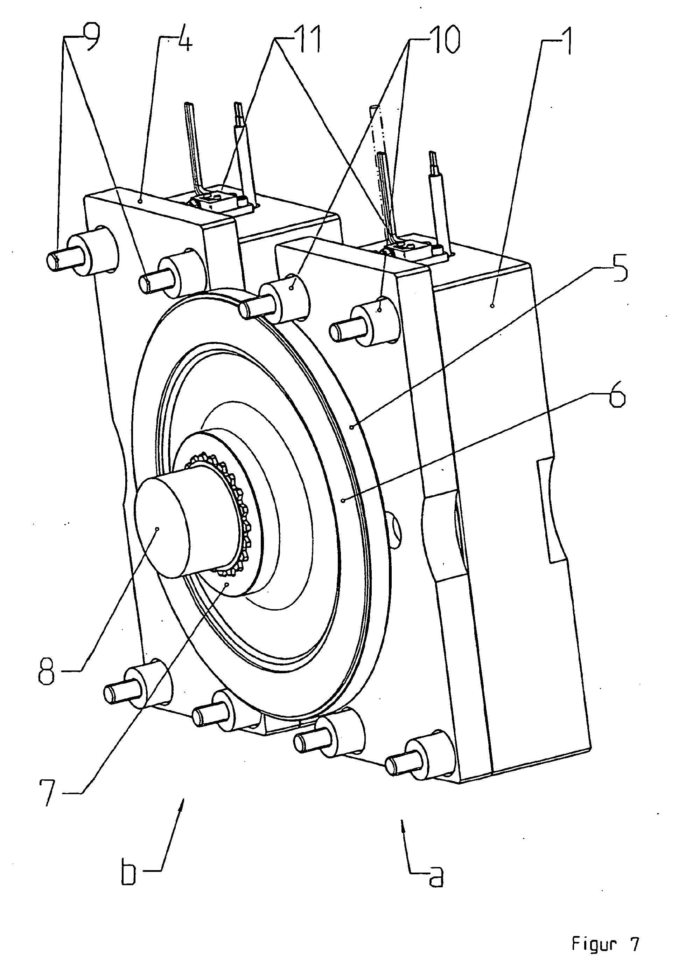

   In Figur 7 wird ein Schrägbild mit beiden Bremsen a und b sowie dem zugehörigen Rotor 5, welcher für beide Bremsen zuständig ist, dargestellt.
Figur 8
   Alternative Ausführungsform mit mehreren, auf dem Umfang verteilten Federdruckbremsen.

### Beschreibung:

In Figur 1 wird dargestellt, dass beide Bremsen a und b auf einen Rotor 5 mit Reibbelag 6 wirken. Somit ist eine Zweikreisigkeit der Bremse, welche für Aufzugsanlagen gefordert ist, gegeben.

### Figur 2 zeigt die Wirkungsweise:

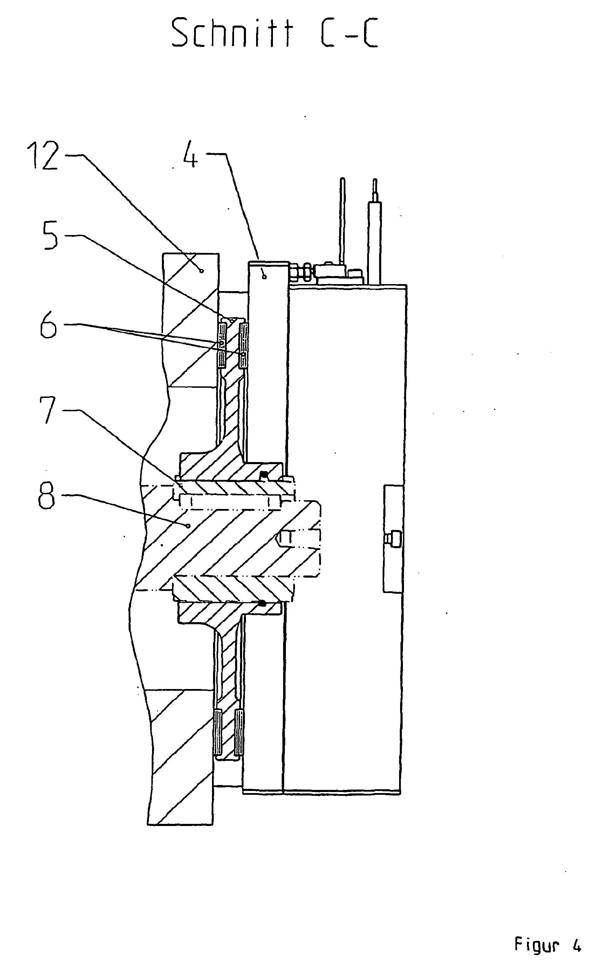

Es handelt sich um eine bekannte Federdruckbremse, wobei die Magnetspule 2, welche im Spulenträger 1 eingegossen ist, bestromt wird, gegen den Federdruck der Druckfedern 3, die Ankerscheibe 4 über einen Luftspalt 13 angezogen wird. Somit kann der Rotor 5, mit den beiden Reibbelägen 6, über die Zahnnabe 7 (Fig. 4), die Abtriebswelle 8 (Fig.4) frei umlaufen. Wird nun die Spannung an der Spule 2 weggenommen, drücken die Druckfedern 3 die Ankerscheibe 4 gegen den Rotor 5, mit den beiden Reibbelägen 6, gegen eine Maschinenwand 12 (Figur 4) und die Abtriebswelle 8 (Fig.4) wird über die Zahnnabe 7 (Fig.4) abgebremst.

Die Lüftüberwachung 11 (Figur 2) zeigt den Zustand der Ankerscheibe 4 an, ob die Bremse a und b jeweils gebremst oder gelüftet (frei) ist.

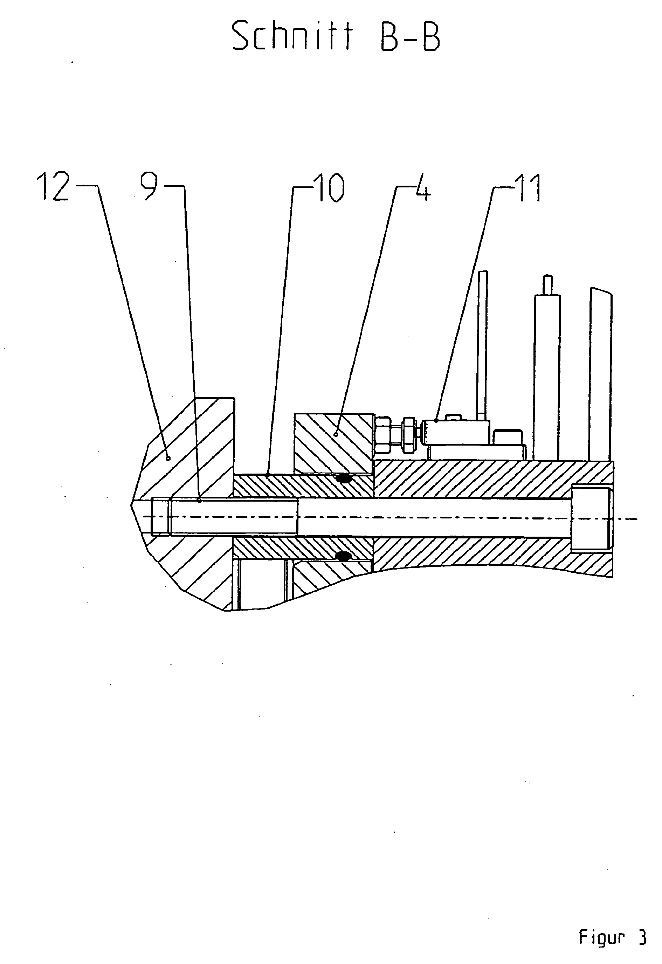

In Figur 3 wird die Befestigung der Bremse über Abstandsbuchsen 10 an der Maschinenwand 12 über Befestigungsschrauben 9 dargestellt.

Figur 4 zeigt den Bremsenanbau einer der beiden Bremsen a oder b an die Maschinenwand 12 und die abzubremsende Welle 8. Durch die Zahnnabe 7 und einer Verzahnung im Rotor 5 kann dieser sich axial frei bewegen und im gelüfteten Zustand (Ankerscheibe 4 gegen Federdruck 3 angezogen (Fig.2)) frei umlaufen.

Figur 5 zeigt eine weitere Ausgestaltung der Bremse a und b, in dem die Magnetspule 2 nicht oval, wie in Figur 1, sondern aufgeteilt in zwei kreisrunde Spulen pro Bremse ausgeführt ist. Eine kreisrunde Spule lässt sich kostengünstiger fertigen als eine ovale Spule.

In Figur 6 wird ein Schnitt durch die beiden kreisrunden Spulen gezeigt.

In Figur 7 wird noch einmal, durch eine Schrägzeichnung, die beiden Bremsen a und b übersichtlich dargestellt, wie beide Bremsen unabhängig voneinander arbeiten können, jedoch beide auf den gleichen Rotor 5 mit den Reibbelägen 6 wirken. Es kann jede Bremse separat bestromt werden und jede Bremse für sich erzeugt jeweils 50 % des gesamten Bremsmomentes und beide Bremsen zusammen 100 %.

Somit ist bei dem Ausfall einer Bremse, z.B. durch Verklemmen der Ankerscheibe, immer noch 50 % des Drehmomentes durch die zweite Bremse gegeben.

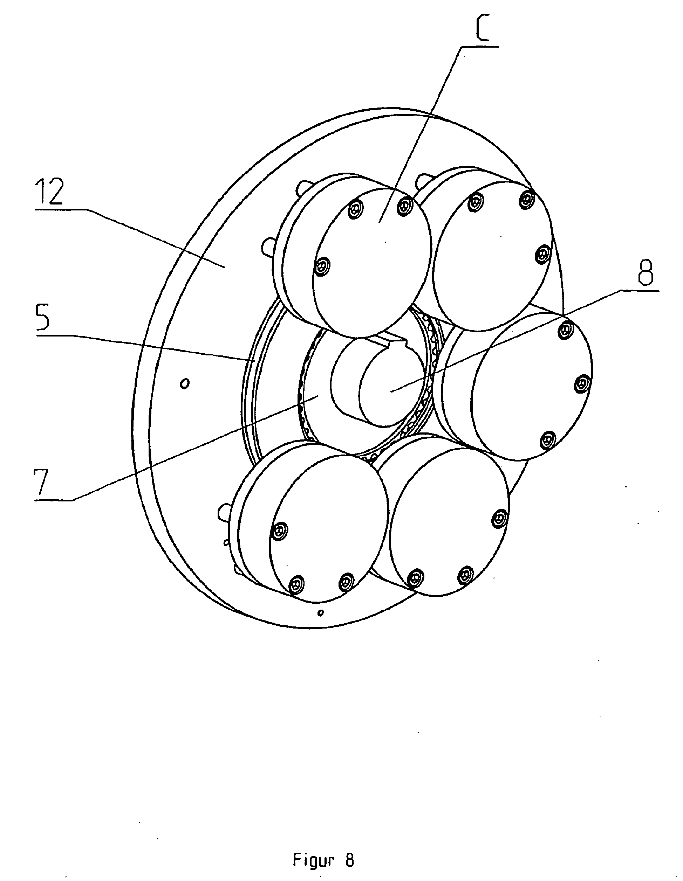

In Figur 8 wird dargestellt, dass auch die Möglichkeit besteht, mehrere runde Federdruckbremsen mit runden Ankerscheiben auf den Rotor 5 wirken zu lassen. Somit kann das Drehmoment noch variabler gestaltet werden und beim Ausfall einer Bremse sind noch mehrere andere Bremsen und somit mehr als 50 % des Drehmomentes vorhanden. Bei der Figur 8 wurde eine Bremse nicht dargestellt um die Funktion besser zu sehen.

### Bezugszeichenliste:

- 1: Spulenträger
- 2: Spule
- 3: Druckfedern
- 4: Ankerscheibe
- 5: Rotor
- 6: Reibbeläge (Maschinenwandseite und Ankerscheibenseite)
- 7: Zahnnabe
- 8: Abtriebswelle
- 9: Befestigungsschrauben
- 10: Abstandsbuchsen
- 11: Lüftüberwachung
- 12: Maschinenwand
- 13: Luftspalt

## Patentansprüche

1. Segmentbremse mit mehrerenelektromagnetisch lüftenden Federdruckbremsen zum Anbau an eine Maschinenwand oder ähnliches und mit einem Bremsrotor, wobei die Spulenträger (1) und Ankerscheiben (4) aufweisenden Bremsen stirnseitig am Umfang verteilt auf den axial beweglichen Bremsrotor mit beiderseitig (d.h. links und rechts) durchgehenden Reibbelägen wirken, der an der Maschinenwand oder ähnlichem mit der einen (linken) Fläche des Reibbelages und auf der gegenüberliegenden Seite mit den Ankerscheiben der Bremsen auf dem zweiten (rechten) Reibbelag abgebremst wird, wobei die Federdruckbremsen (a, b, c) stirnseitig exzentrisch zur Mittelachse des Rotors angebracht sind und mit ihrer Ankerscheibe (4) axial auf den Rotor (5) mit den beiden Reibbelägen (6) und diesen gegen die Maschinenwand (12) drücken, und wobei die Spulenträger (1) rechteckig ausgebildet sind und die Ankerscheibe (4) entsprechend ebenfalls rechteckig ausgeführt und die Magnetspule (2) oval und raumoptimiert ausgeführt ist.

2. Segmentbremse mit mehrerenelektromagnetisch lüftenden Federdruckbremsen zum Anbau an eine Maschinenwand oder ähnliches und mit einem Bremsrotor, wobei die Spulenträger (1) und Ankerscheiben (4) aufweisenden Bremsen stirnseitig am Umfang verteilt auf den axial beweglichen Bremsrotor mit beiderseitig (d.h. links und rechts) durchgehenden Reibbelägen wirken, der an der Maschinenwand oder ähnlichem mit der einen (linken) Fläche des Reibbelages und auf der gegenüberliegenden Seite mit den Ankerscheiben der Bremsen auf dem zweiten (rechten) Reibbelag abgebremst wird, wobei die Federdruckbremsen (a, b, c) stirnseitig exzentrisch zur Mittelachse des Rotors angebracht sind und mit ihrer Ankerscheibe (4) axial auf den Rotor (5) mit den beiden Reibbelägen (6) und diesen gegen die Maschinenwand (12) drücken, und wobei die Spulenträger (1) und die Ankerscheiben (4) rechteckig ausgeführt sind, jedoch pro Bremse zwei ringförmig ausgeführte Magnetspulen (2) raumoptimiert vorgesehen sind.

3. Segmentbremse nach Anspruch 1 oder 2, **dadurch gekennzeichnet, dass** die Bremsen mit Abstandsbuchsen (10) an die Maschinenwand (12) oder ähnliches angeschraubt sind.

4. Segmentbremse nach einem der voranstehenden Ansprüche, **dadurch gekennzeichnet, dass** der Rotor (5) über eine Zahnnabe (7) axial beweglich ausgeführt ist.

5. Segmentbremse nach einem der voranstehenden Ansprüche, **dadurch gekennzeichnet, dass** jede Bremse mit einer Lüftüberwachung (11) ausgeführt ist, damit der Zustand der Bremse (gebremst oder gelüftet) angezeigt wird.

6. Segmentbremse nach einem der voranstehenden Ansprüche, **dadurch gekennzeichnet, dass** die Bremsen mittels einer Nothandlüftung ausgerüstet sind, welche über zwei zusätzliche Schrauben die Ankerscheibe (4) gegen den Federdruck (3) bei Stromausfall die Magnetspule (2) anzieht und den Luftspalt (13) überwinden und somit die Bremse lüften (freimachen) kann.

## Claims

1. Segment brake comprising a plurality of electromagnetically disengaging spring-pressure brakes for attachment to a machine wall or the like, said brake also comprising a brake rotor, said brakes having coil carriers (1) and armature discs (4) and being peripherally distributed facing the axially movable rotor to act thereonto by means of friction liners continuously disposed on both (i.e. the left and right-hand) sides, said rotor being decelerated on one side against the machine wall or the like structural element by one (i.e. the left-hand) surface of the friction liner and on the opposite side against the armature discs of the brakes by the second (i.e. the right-hand) friction liner, said spring-pressure brakes (a, b, c) being mounted in an axially facing position and to be excentric relative to the central axis of said rotor (5) to have armature disc (4) exert axial pressure onto rotor (5) by both friction liners (6) and to urge said rotor against said machine wall (12), and with said coil carrier (1) and said armature disc (4) being correspondingly rectangular in shape and magnetic coil (2) being oval and configured to optimize its use of the available space.

2. Segment brake comprising a plurality of electromagnetically disengaging spring-pressure brakes for attachment to a machine wall or the like, said brake also comprising a brake rotor, said brakes having coil carriers (1) and armature discs (4) and being peripherally distributed facing the axially movable rotor to act thereonto by means of friction liners continuously disposed on both (i. e. the left and right-hand) sides, said rotor being decelerated on one side against the machine wall or the like structural element by one (i.e. the left-hand) surface of the friction liner and on the opposite side against the armature discs of the brakes by the second (i.e. the right-hand) friction liner, with said spring-pressure brakes (a, b, c) being mounted in an axially facing position and to be excentric relative to the central axis of said rotor (5) to have armature disc (4) exert axial pressure onto rotor (5) by both friction liners (6) and to urge said rotor against said machine wall (12), and with said coil carrier (1) and said armature disc (4) being rectangular in shape and two annular magnetic coils (2) being provided per brake and configured to optimize the use of the available space.

3. Segment brake as in claim 1 or 2, **characterized by** the brakes being attached to machine wall (12) or the like by threaded fasteners extending through spacer sleeves (10).

4. Segment brake as in any of the preceding claims, **characterized by** rotor (5) being axially movable along a splined hub (7).

5. Segment brake as in any of the preceding claims, **characterized by** each said brakes being provided with disengagement monitoring means (11) adapted to indicate the operating status (engaged or disengaged) of said brakes.

6. Segment brake as in any of the preceding claims, **characterized by** the brakes being equipped with a manual emergency disengagement feature operative to attract armature disc (4) against spring pressure (3) and to overcome air gap (13) so as to disengage the brake in case of power failure to solenoid (2).

## Revendications

1. Frein à segment comprenant plusieurs freins à ressort à desserrage électromagnétique pour le montage sur une paroi de machine ou analogue, avec un rotor de frein, frein à segment dans lequel les freins présentant des porte-bobines (1) et des disques d'induit (4) agissent du côté frontal, répartis sur le pourtour, sur le rotor de frein mobile dans la direction axiale par des garnitures de friction continues bilatérales (c'est-à-dire à gauche et à droite), lequel rotor de frein est freiné sur la paroi de machine, ou analogue, par l'une des surfaces (gauche) de la garniture de friction et sur le côté opposé par les disques d'induit des freins sur la seconde (droite) garniture de friction, frein à segment dans lequel les freins à ressort (a, b, c) sont montés du côté frontal de façon excentrée par rapport à l'axe médian du rotor et pressent par leur disque d'induit (4), dans la direction axiale, sur le rotor (5) par les deux garnitures de friction (6) et ce dernier contre la paroi de machine (12), et dans lequel les porte-bobines (1) ont une configuration rectangulaire et le disque d'induit (4) a en conséquence également une réalisation rectangulaire et la bobine magnétique (2) a une réalisation ovale et optimisée dans l'espace.

2. Frein à segment comprenant plusieurs freins à ressort à desserrage électromagnétique pour le montage sur une paroi de machine ou analogue, avec un rotor de frein, frein à segment dans lequel les freins présentant des porte-bobines (1) et des disques d'induit (4) agissent du côté frontal, répartis sur le pourtour, sur le rotor de frein mobile dans la direction axiale par des garnitures de friction continues bilatérales (c'est-à-dire à gauche et à droite), lequel rotor est freiné sur la paroi de machine, ou autres, par l'une des surfaces (gauche) de la garniture de friction et sur le côté opposé par les disques d'induit des freins sur la seconde (droite) garniture de friction, frein à segment dans lequel les freins à ressort (a, b, c) sont montés du côté frontal de façon excentrée par rapport à l'axe médian du rotor et pressent par leur disque d'induit (4), dans la direction axiale, sur le rotor (5) par les deux garnitures de friction (6) et ce dernier contre la paroi de machine (12), et dans lequel les porte-bobines (1) et le disque d'induit (4) ont une réalisation rectangulaire, deux bobines magnétiques annulaires (2) optimisées dans l'espace étant toutefois prévues par frein.

3. Frein à segment suivant l'une des revendications 1 et 2, **caractérisé en ce que** les freins sont vissés par des douilles d'écartement (10) sur la paroi de machine (12) ou analogue.

4. Frein à segment suivant l'une des revendications précédentes, **caractérisé en ce que** le rotor (5) a une réalisation mobile dans la direction axiale par l'intermédiaire d'un moyeu cannelé (7).

5. Frein à segment suivant l'une des revendications précédentes, **caractérisé en ce que** chaque frein est réalisé avec un contrôle de desserrage (11), afin d'indiquer l'état du frein (freiné ou desserré).

6. Frein à segment suivant l'une des revendications précédentes, **caractérisé en ce que** les freins sont équipés d'un desserrage manuel de secours, qui tire par l'intermédiaire de deux vis supplémentaires le disque d'induit (4) contre la pression de ressort (3) en cas de panne de courant de la bobine magnétique (2), peut surmonter l'entrefer (13) et ainsi desserrer (libérer) le frein.
